Europäisches Patentamt

European Patent Office

Office européen des brevets

(19)

(11) Numéro de publication : **0 453 373 B1**

# (12) FASCICULE DE BREVET EUROPEEN

(45) Date de publication du fascicule du brevet :
01.09.93 Bulletin 93/35

(51) Int. Cl.$^5$ : **B01J 8/38,** F23C 11/02

(21) Numéro de dépôt : **91401041.8**

(22) Date de dépôt : **18.04.91**

(54) **Procédé et dispositif de réalisation d'une réaction entre un gaz et un matériau solide divisé dans une enceinte.**

(30) Priorité : **20.04.90 FR 9005060**

(43) Date de publication de la demande :
**23.10.91 Bulletin 91/43**

(45) Mention de la délivrance du brevet :
**01.09.93 Bulletin 93/35**

(84) Etats contractants désignés :
**AT BE CH DE DK ES FR GB GR IT LI NL SE**

(56) Documents cités :
**EP-A- 0 332 360
FR-A- 2 323 101
US-A- 4 594 967
US-A- 4 788 919**

(73) Titulaire : **STEIN INDUSTRIE Société Anonyme dite:**
**19-21, avenue Morane Saulnier**
**F-78140 Vélizy Villacoublay (FR)**

(72) Inventeur : **Vidal, Jean**
**19/21 Chemin Desvallières**
**F-92410 Ville D'Avray (FR)**
Inventeur : **Payen, Philippe**
**1 Allée de la Grande Terre**
**F-78170 La Celle St Cloud (FR)**
Inventeur : **Semedard, Jean-Claude**
**5, rue Georges Saché**
**F-75014 Paris (FR)**
Inventeur : **Morin, Jean-Xavier**
**39, rue du Cas rouge Marchandon**
**F-45170 Neuville Aux Bois (FR)**

(74) Mandataire : **Weinmiller, Jürgen et al**
**Lennéstrasse 9 Postfach 24**
**D-82336 Feldafing (DE)**

**Description**

La présente invention concerne un dispositif de réalisation d'une réaction exothermique ou endothermique dans une enceinte (ci-après appelé le "réacteur") entre au moins un gaz et au moins un matériau solide divisé, comprenant au moins un moyen d'introduction du matériau solide divisé, au moins un moyen d'introduction de gaz de fluidisation et de réaction, les débits respectifs d'introduction de matériau solide divisé et de gaz de fluidisation étant tels qu'ils permettent l'établissement d'une circulation ascendante rapide du gaz et du matériau solide divisé dans les zones à lit fluidisé en circulation rapide, des moyens pour envoyer le mélange de gaz réactionnel et de matériau solide divisé arrivant en haut du réacteur dans un organe de séparation, des moyens pour évacuer le gaz produit par la réaction, et des moyens pour recycler le matériau solide divisé provenant de l'organe de séparation dans le bas du réacteur.

Les techniques similaires connues pour effectuer des réactions chimiques en lit fluidisé appartiennent essentiellement à deux groupes.

Un premier groupe fait appel à un lit fluidisé dense, caractérisé par l'existence de deux zones distinctes du point de vue de la concentration en solides divisés dans l'enceinte réactionnelle cette concentration en solides divisés étant élevée dans une première zone, par exemple 1000 Kg/m$^3$ pour un lit fluidisé de combustion, et notablement plus faible, inférieure à 1 Kg/m$^3$, dans une seconde zone au-dessus de la première, séparée de celle-ci par une surface relativement bien définie. La différence de vitesse entre les gaz et les particules solides n'est pas importante. Dans le cas de réacteurs de combustion, les rendements de combustion sont peu élevés, par exemple de 85 à 95 %, et les taux de rejets d'oxydes de soufre et d'oxydes d'azote sont importants, ce qui limite cette technique aux installations de faible puissance.

Dans le cadre de ce premier groupe de techniques, on a proposé, dans le document GB-A-1 412 033, de diviser un réacteur de combustion à lit fluidisé dense par une cloison annulaire, de bord inférieur espacé de la grille de fluidisation, en une région centrale de combustion en lit dense et une région annulaire en lit dense à circulation descendante des particules solides, dans le but unique d'assurer un échange de chaleur avec une chemise entourant le réacteur. Une partie des particules solides de la région centrale en lit dense déborde au-dessus de la cloison annulaire et redescend dans la région annulaire en lit dense puis revient dans la zone centrale de combustion au-dessous du bord inférieur de la cloison annulaire. Ce type de dispositif présente les inconvénients précédemment indiqués des réacteurs à lit fluidisé dense, principalement l'existence d'une zone de réaction à très faible concentration de solides au-dessus du lit dense. D'autre part, il assure une recirculation des matières solides prélevées uniquement en partie supérieure de la zone fluidisée dense de la même façon qu'un cyclône qui serait situé en sortie d'un lit fluidisé circulant du genre qui va être maintenant décrit.

Un second groupe de techniques connues fait en effet appel à un lit fluidisé dit "circulant" d'un type décrit dans l'article de REH paru dans la revue Chemical Engineering Progress de Février 1971. Il est notamment utilisé dans les brevets français 2 323 101 et 2 353 332 (METALLGESELLSCHAFT). Il se différencie du premier groupe notamment par l'absence de surface de séparation entre deux zones et par l'existence de températures de réaction homogènes dans l'ensemble du réacteur. La concentration en matières solides divisées varie de façon sensiblement continue de bas en haut de l'ensemble du réacteur, et la différence entre les vitesses des gaz et des particules solides est beaucoup plus élevée. Pour les réacteurs de combustion, les rendements de combustion sont meilleurs et les taux de rejets d'oxydes de soufre et d'oxydes d'azote sont plus faibles. Cette technique peut s'appliquer aux installations de puissance élevée, mais présente encore des inconvénients.

On peut constater notamment ceux-ci dans le cas d'une réaction de combustion. On constate que le réacteur à lit fluidisé circulant peut être décrit de la façon suivante :

a) une zone haute, la plus importante en volume, avec une concentration variable, limitée mais cependant suffisante en particules solides. Dans cette zone haute, on effectue un échange de chaleur, en général avec des tubes dans l'espace libre du réacteur ou avec des parois tapissées de tubes, dans lesquels passe un fluide de refroidissement du réacteur. La concentration en solides varie par exemple de bas en haut de cette zone de 50 Kg/m$^3$ à 10 Kg/m$^3$, ces chiffres pouvant être parfois moins élevés. Ils correspondent en pratique à la réalisation d'un échange de chaleur avec des tubes tapissant les parois. La vitesse des gaz à pleine charge est en général limitée à des valeurs allant de 4 m/s à 6 m/s, pour éviter les risques d'érosion,

b) une zone basse, avec une concentration beaucoup plus élevée en solides, variant par exemple de bas en haut de 500 Kg/m$^3$ à 50 Kg/m$^3$, soit dans un rapport de 10, qui peut même passer à 20 si le réacteur fonctionne à demi-charge, soit avec une vitesse du gaz de fluidisation deux fois moins élevée. Cette zone basse est en fait la zone de combustion ; une partie du gaz nécessaire à la combustion, appelée généralement gaz primaire, y est insufflée à travers une grille de fluidisation située à la base du réacteur. La majeure partie du reste du gaz de combustion, appelée gaz secondaire, est injectée à plusieurs niveaux au-dessus de cette grille, l'utilisation de ces niveaux pouvant varier avec la charge du réacteur (mise hors fonctionnement de certains niveaux en cas de charge partielle).

La vitesse des gaz de combustion dans cette zone basse du réacteur résulte de sa variation de section et des apports étagés de gaz secondaire, la vitesse recherchée est pratiquement la même que dans la zone haute. Ceci est à l'origine d'une grande variation des concentrations dans la zone de combustion qui entraîne plusieurs inconvénients :

- une combustion incomplète : les teneurs en imbrûlés et en oxyde de carbone peuvent être élevées à la sortie du réacteur pour certains combustibles difficiles à brûler,
- un rendement de désulfuration pouvant être insuffisant, entraînant la nécessité d'injecter des quantités importantes d'agent désulfurant,
- une limitation de souplesse en réponse aux variations de charge du réacteur, due à la nécessité de conserver une vitesse minimale des gaz pour maintenir un régime de fluidisation satisfaisant, cette vitesse étant de l'ordre de 3 m/s.

Pour améliorer l'homogénéité de température et la combustion, on est donc souvent contraint d'augmenter la quantité de matières solides présentes dans le réacteur, ce qui entraîne une augmentation de la consommation d'énergie pour leur mise en fluidisation.

Pour lutter contre ces inconvénients, on utilise souvent une injection de gaz secondaire à différents niveaux, et on fait varier le rapport des débits de gaz primaire et secondaire en fonction de la charge du réacteur. Mais on ne peut jouer sur ces facteurs que dans une mesure limitée, car d'autres critères qui doivent intervenir s'opposent à leur variation :

- la qualité de la combustion, qui nécessite de maintenir le débit de gaz primaire au-dessus d'une valeur minimale,
- la nécessité de maintenir une atmosphère réductrice dans la partie basse de la zone inférieure du réacteur, pour réduire au minimum la production d'oxydes d'azote,
- la nécessité d'augmenter l'excès de gaz nécessaire à la combustion quand la charge du réacteur baisse, pour éviter d'accroître de manière trop importante l'hétérogénéité de la concentration en solides, tout en veillant à limiter le plus possible la production d'oxydes d'azote et à ne pas réduire sensiblement le rendement thermique de l'installation.

La grande variation des concentrations dans la zone basse, formant zone de combustion, est donc gênante, et l'on devrait rechercher une plus grande homogénéité des concentrations entre les différents niveaux, qui améliorerait non seulement le rendement de combustion, mais aussi la consommation d'énergie nécessaire pour la fluidisation.

Or le lit fluidisé circulant ne peut répondre à ce besoin du fait de deux problèmes particuliers :

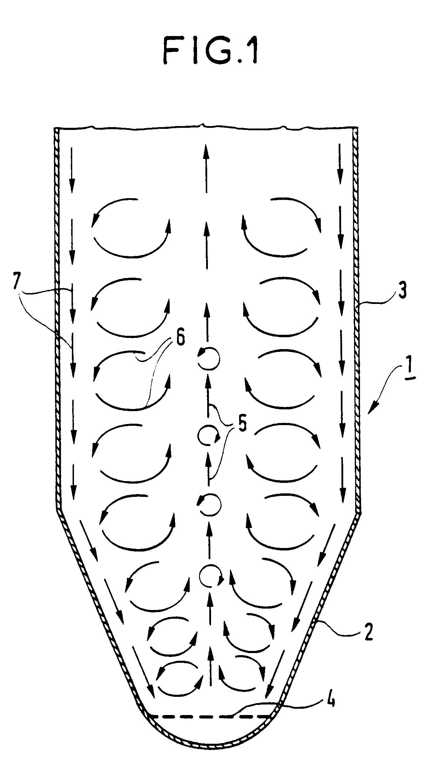

a) la vitesse du gaz de fluidisation dans la zone de combustion est en relation avec celle qui a été choisie dans la zone haute où s'effectue l'échange de chaleur,

b) les particules solides sont animées de mouvements descendants et ascendants, comme représenté sur la figure 1 schématique, et une grande quantité de particules solides de faible granulométrie ne redescend jamais au voisinage de la grille de fluidisation, ce qui produit une stratification granulométrique sur la hauteur du réacteur et conduit celui-ci à fonctionner en zone basse avec des particules de granulométrie plus élevée. Il apparaît par exemple dans le premier mètre en hauteur au-dessus de la grille de fluidisation une concentration assez proche de celle d'un lit dense, ce qui est coûteux en énergie et inutile pou une bonne combustion.

Dans cette même technique, d'autres brevets ont amené quelques aménagements au fonctionnement d'un lit fluidisé circulant :

Le brevet U.S. 4 594 967 et le brevet EP 0332 360 prévoient l'installation d'un lit fluidisé dense de captation des matières à la sortie du lit fluidisé circulant, les matières ainsi captées venant diminuer celles captées dans le cyclone classique situé en aval de la chambre d'expansion formant zone de désengagement située au-dessus du lit dense.

Dans ces brevets :

- Le lit fluidisé dense est situé à la sortie du lit fluidisé circulant soit sur le côté de celui-ci (brevet EP 0332 360 pour un réacteur de section rectangulaire plane et brevet U.S. 4 594 967) soit directement au-dessus de celui-ci (brevet EP 0332 360 pour un réacteur de section plane circulaire).
- Le cyclone est situé soit en aval de la chambre d'expansion (brevet EP 0332 360) soit après une enceinte tubée qui est équipée d'échangeurs abaissant la température des gaz (brevet U.S. 4 594 967) et qui ne fait donc pas partie du lit fluidisé circulant, objet du brevet. Dans tous les cas, les matières prélevées par le lit fluidisé dense viennent en diminution de celles recueillies dans le cyclone et ne changent pas la quantité maximum de matières recirculées dans le lit fluidisé circulant.
- Dans ces deux brevets, la chambre d'expansion située en aval de la zone où est installé le lit fluidisé dense ne présente pas les caractéristiques fondamentales d'un lit circulant (température homogène, vitesse des gaz ascendante, concentration en matières solides) qui permettraient d'utiliser cette zone pour transférer la chaleur du mélange gaz-solide aux parois tout en conservant une température homogène et une agitation gaz-solides propices à la poursuite des réactions chimiques.

Un autre brevet U.S. 478 8919 prévoit une division du réacteur en trois, deux ou une seule chambre, la frontière entre chacune des chambres étant réalisée avec une chambre d'expansion où la section peut être, comme mentionné, quatre fois plus importante que celle du réacteur, et où la vitesse de gaz n'est donc plus celle d'un réacteur à lit fluidisé circulant. Cette diminution de vitesse permet une captation des matières dans des lits fluidisés denses qui diminue drastiquement la concentration en matières dans la ou les deux autres chambres supérieures ce qui fait que le fonctionnement en lit fluidisé circulant n'existe que dans la chambre inférieure, les autres chambres servant avec leurs extensions à capter des compléments de matières en faible quantité et à en assurer un refroidissement complémentaire ce qui conduit le rédacteur du brevet à privilégier la conception avec une seule chambre et ramène alors le brevet à une disposition semblable à celle des brevets U.S. 4 594 967 et EP 0332 360, c'est-à-dire l'installation d'un lit fluidisé dense à la sortie d'un réacteur à lit fluidisé circulant. En tout état de cause, dans le cas d'une conception avec plusieurs chambres, c'est la même vitesse de gaz qui est maintenue dans celles-ci.

En conclusion ces brevets sont des évolutions de la technique connue de type lit fluidisé circulant dont les inconvénients ont été exposés auparavant.

Par rapport à cette technique ils se caractérisent par une réduction des matières solides captées par les cyclones ou séparateurs mais ne modifient pas le profil de concentration et de pression caractéristique de la technique connue appelée lit fluidisé circulant.

La présente invention a pour but de procurer un procédé et un dispositif de réalisation d'une réaction dans une enceinte entre un gaz et un matériau solide divisé comportant une structure nouvelle de lit fluidisé, présentant une plus grande homogénéité des concentrations en particules solides dans la partie basse, avec une concentration modérée en particules solides dans cette zone qui forme éventuellement zone de combustion, et avec'une vitesse relativement importante du gaz de fluidisation dans cette zone basse.

Le procédé et le dispositif selon l'invention sont définis dans les revendications 1 et 2.

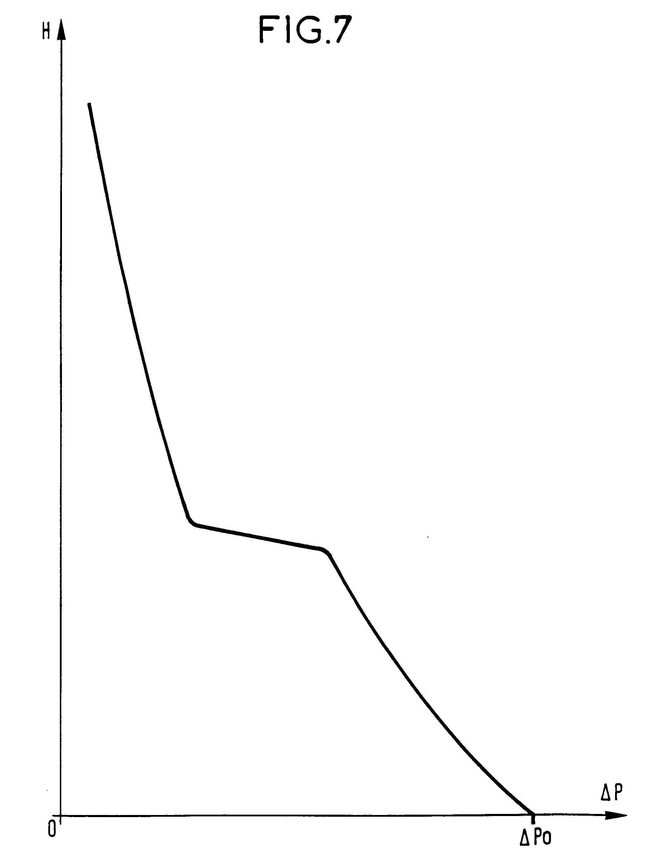

Dans un tel dispositif le profil des pressions le long de la hauteur des zones à lit fluidisé circulant (zone supérieure et zone inférieure) est tel qu'indiqué sur le schéma de la figure 7. La concentration en solides qui se déduit de la pente en tout point de ce profil présente une région de discontinuité de part et d'autre du déversoir du lit fluidisé dense, caractéristique du dispositif. On obtient, grâce à une telle structure,

- une répartition de température plus homogène dans le réacteur, avec diminution des risques d'agglomération des particules solides,
- dans le cas de réacteurs de combustion, une amélioration de la combustion, par diminution de la formation d'oxyde de carbone et d'imbrûlés solides, surtout pour les combustibles difficiles à brûler, par exemple les charbons maigres et les anthracites,

- une amélioration de la souplesse du réacteur par abaissement de sa charge minimale admissible, ceci étant rendu possible par un rapport élevé entre la vitesse du gaz à pleine charge dont la zone basse et la vitesse minimale nécessaire pour maintenir un régime de fluidisation satisfaisant.

L'invention s'étend en outre à l'application du dispositif ci-dessus défini à la combustion de matières carbonées.

Il est décrit ci-après, à titre d'exemple et en référence aux figures schématiques du dessin annexé, des dispositifs de combustion de charbon pulvérulent selon l'invention.

La figure 1 représente un schéma d'écoulement des matières solides divisées dans un réacteur à lit fluidisé circulant de type connu.

La figure 2 représente un dispositif selon l'invention à lits fluidisés circulant et lit fluidisé dense intermédiaire.

Les figures 3A et 3B représentent selon deux coupes verticales à angle droit la zone inférieure d'un réacteur à deux lits fluidisés denses latéraux, la figure 3B étant une coupe selon l'axe IIIB-IIIB de la figure 3A.

Les figures 4A et 4B représentent selon deux coupes verticales à angle droit la zone inférieure d'un réacteur à trois lits fluidisés denses, la figure 4B étant une coupe selon l'axe IVB-IVB de la figure 4A.

Les figures 5A et 5B représentent selon deux coupes verticales à angle droit la zone inférieure d'un réacteur à quatre lits fluidisés denses, la figure 5B étant une coupe selon l'axe VB-VB de la figure 5A.

Les figures 6A, 6B et 6C représentent la disposition des surfaces d'échange de chaleur dans les deux lits denses d'un réacteur, les figures 6B et 6C étant deux variantes d'une coupe selon l'axe VIB-VIB de la figure 6A.

La figure 7 représente le profil des pressions dans le dispositif selon l'invention.

Dans la figure 1, correspondant à un fonctionnement classique de lit circulant, le réacteur 1 comporte une zone inférieure 2 de section croissante et une zone supérieure parallélépipèdique 3. Les particules de solides s'élèvent au-dessus de la grille de fluidisation 4 vers le haut du réacteur selon les flèches 5. Ces particules tendent à s'écarter vers les parois et à retomber vers le bas. Toutefois, une partie des particules les plus fines est réentraînée vers le haut, suivant les mouvements tourbillonnaires tels que 6. Les autres particules se rapprochent de la paroi et s'écoulent le long de celle-ci vers le bas selon les flèches 7.

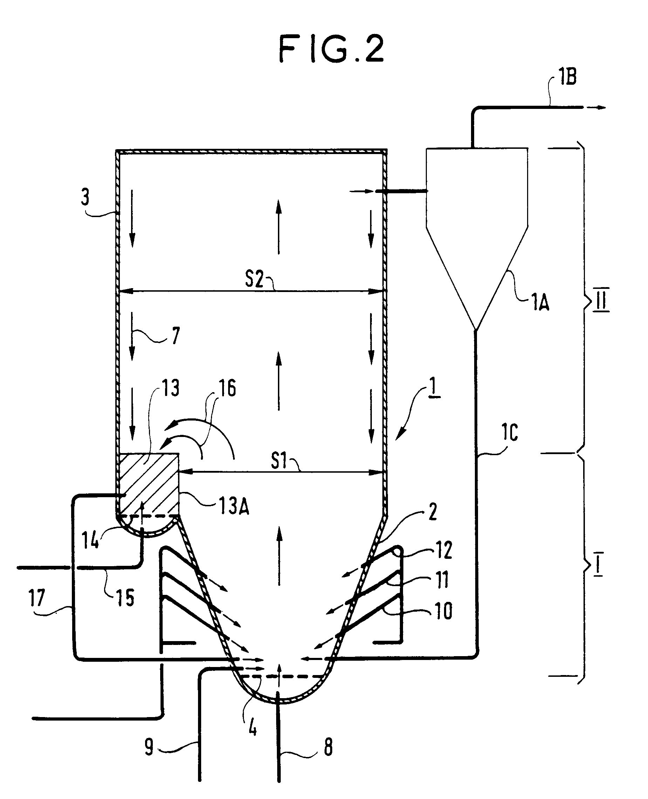

Dans le dispositif de l'invention selon la figure 2, il est constitué dans la zone inférieure de section croissante 2 un lit fluidisé en circulation rapide au-dessus de la grille de fluidisation 4. Il est injecté à travers cette grille un gaz de fluidisation primaire, formé d'air additionné éventuellement de fumées de combustion ou d'oxygène, arrivant par le conduit 8. Du combustible pulvérulent, par exemple du charbon en suspension dans de l'air, est par ailleurs introduit juste au-dessus de cette grille. Un gaz secondaire, formé également d'air, avec ou sans fumées de combustion ou oxygène, est injecté dans la zone inférieure du réacteur à trois niveaux successifs 10, 11, 12. La vitesse du gaz de fluidisation en fût vide et à pleine charge peut varier de 4,8 m/s à 12 m/s environ, le temps de séjour des gaz à pleine charge peut varier de 0,25 à 4 secondes.

Les injections de gaz secondaire sont conduites de manière à ce que l'atmosphère soit réductrice dans le bas de la zone inférieure 2.

Au-dessus de cette zone inférieure, un deuxième lit fluidisé en circulation rapide est établi, la vitesse des gaz de fluidisation en fût vide et à pleine charge peut varier de 4 à 10 m/s et leur temps de séjour est compris entre 2 et 10 secondes.

De façon connue, les fumées chargées de particules solides évacuées en tête du réacteur passent dans un cyclone de séparation 1A, d'où les fumées débarrassées des poussières sont évacuées par le conduit 1B et les particules solides séparées sont recyclées dans le bas du réacteur par le conduit 1C.

Par ailleurs, il a été constitué à la sortie de la zone de combustion de section droite terminale $S_1$, un lit fluidisé dense 13, représenté par des hachures, séparé de la zone de combustion par une cloison 13A, et au-dessus d'une grille de fluidisation 14, à travers laquelle est injecté un gaz de fluidisation auxiliaire introduit par le conduit 15. La vitesse de ce gaz en fût vide et à pleine charge dans le lit dense peut varier entre 0,3 m/s et 2,5 m/s. Dans la majorité des cas la combustion résiduelle éventuelle dans ce lit dense est faible, du fait qu'il est disposé à la sortie de la zone de combustion du lit en circulation rapide, et que la teneur résiduelle en carbone des particules est déjà très faible. Dans les cas où la combustion dans ce lit fluidisé dense se révélerait importante, du fait d'un combustible de mauvaise qualité par exemple, on pourrait soit injecter des fumées de combustion dans les buses d'injection sous la grille de ce lit dense de façon à minimiser la teneur en oxygène dans ce lit soit au contraire augmenter la teneur en oxygène dans cette zone pour y accroître la combustion, ce qui peut entraîner la présence d'échangeurs tubulaires dans ce lit.

Selon l'invention, un tel lit dense a de préférence une hauteur relativement faible, généralement inférieure à 1,5 m. Mais sa hauteur peut être augmentée si on veut y installer un échangeur de chaleur, aux environs de 3 à 4 m.

Une fonction essentielle de ce lit fluidisé dense est de capter une partie des particules solides qui redescendent de la zone d'échange de chaleur située au-dessus de ce lit fluidisé dense (flèches 7) et également une partie des particules solides qui montent de la zone inférieure du réacteur, située au-dessous du niveau de ce lit fluidisé dense (flèches 16). Cette captation des particules provenant de la zone inférieure est due à la diminution de la vitesse des gaz dès qu'ils entrent dans la zone supérieure du réacteur. Il faut toutefois noter que nulle part dans le réacteur, ailleurs que dans les lits fluidisés denses et à la différence d'autres procédés, la vitesse des gaz ne descend en dessous de la valeur correspondant à un fonctionnement en lit fluidisé circulant.

Les particules solides captées par le lit fluidisé dense sont acheminées par des conduits 17 jusqu'à la base du réacteur, juste au-dessus de la grille 4. Ces conduits peuvent comporter un siphon alimenté à sa base en gaz de fluidisation. De cette façon, un grand nombre de particules solides de faible granulométrie sont ramenées à la base du réacteur, où elles ne seraient jamais descendues dans les dispositifs connus. La concentration en solides de ce type dans la zone de combustion du réacteur est donc fortement augmentée, particulièrement dans sa région supérieure proche du niveau du lit dense. D'autre part, du simple fait de la variation de section qui résulte de la présence du lit dense, la vitesse du gaz dans la zone inférieure 2 du réacteur est supérieure à celle existant dans la zone supérieure 3 au-dessus du niveau du lit dense.

On obtient naturellement par l'augmentation de cette vitesse une meilleure homogénéisation de la concentration de matières solides dans la zone inférieure du réacteur, ceci assurant une meilleure combustion. La valeur voulue de la vitesse des gaz dans la zone de combustion peut être obtenue par un choix des sections droites $S_1$ et $S_2$, $S_1$ étant la section droite de la zone de combustion au niveau du lit fluidisé dense et $S_2$ celle de la zone supérieure du réacteur, celle de la section droite du lit fluidisé dense étant alors égale à $S_2$-$S_1$. Le débit de matières solides en recirculation dans les conduits 17 dépend aussi de ce rapport des sections droites, car plus la vitesse dans la zone de combustion est élevée plus le débit de particules solides à la sortie de cette zone sera important, et comme la quantité de matières solides descendantes à la base de la zone située au-dessus du lit dense dépend pratiquement de la section droite $S_2$, plus le débit de matières solides captées par le lit fluidisé dense sera important.

Le choix de la section droite du lit dense 13 ($S_2$-$S_1$) est donc un élément important dans le dimensionnement du réacteur d'un dispositif selon l'invention. Par l'augmentation de la vitesse des gaz et de la concentration en matières solides dans la zone de combustion, il détermine en grande partie l'amélioration de l'homogénéité des concentrations qui est obtenue dans la zone de combustion, par rapport aux concentrations dans un lit fluidisé connu.

On obtiendra en pratique d'excellents résultats dans le cas de dispositifs de combustion de charbon pulvérulent en choisissant un rapport des sections $S_2/S_1$ entre 1,20 et 2.

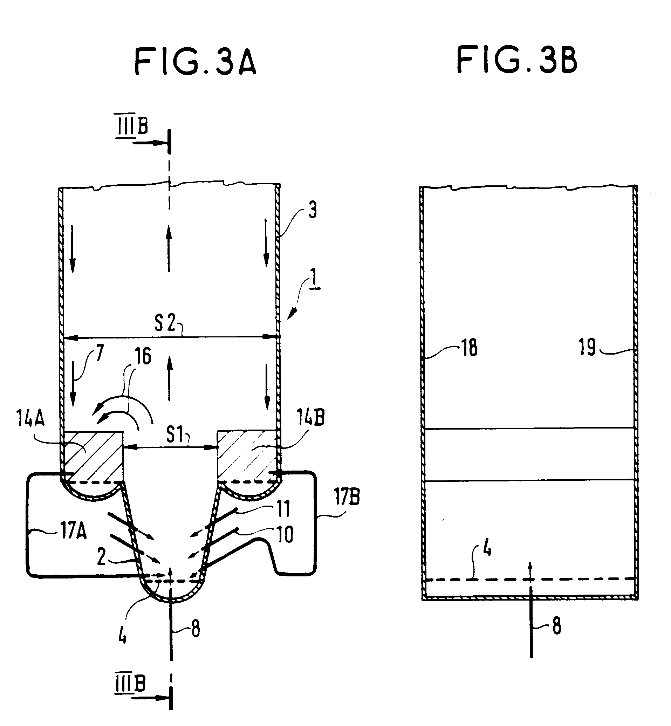

Les figures 3A et 3B représentent le bas d'un réacteur muni de deux lits fluidisés denses 14A, 14B à un niveau intermédiaire, et reliés par des conduits de recirculation 17A, 17B à la base de la zone de combustion, au-dessus de la grille de fluidisation 4. A titre d'exemple il est schématisé en 17B un conduit de réinjection de solides divisés comportant un siphon alimenté à sa base en gaz de fluidisation. On peut ainsi plus facilement obtenir un rapport $S_2/S_1$ élevé, la différence $(S_2-S_1)$ étant égale à la somme des sections droites des deux lits fluidisés denses. Le réacteur ne comporte pas de lits fluidisés denses près de ses faces latérales 18, 19 perpendiculaires aux premières, selon le plan de coupe perpendiculaire à celui de la figure 3A (axe IIIB-IIIB).

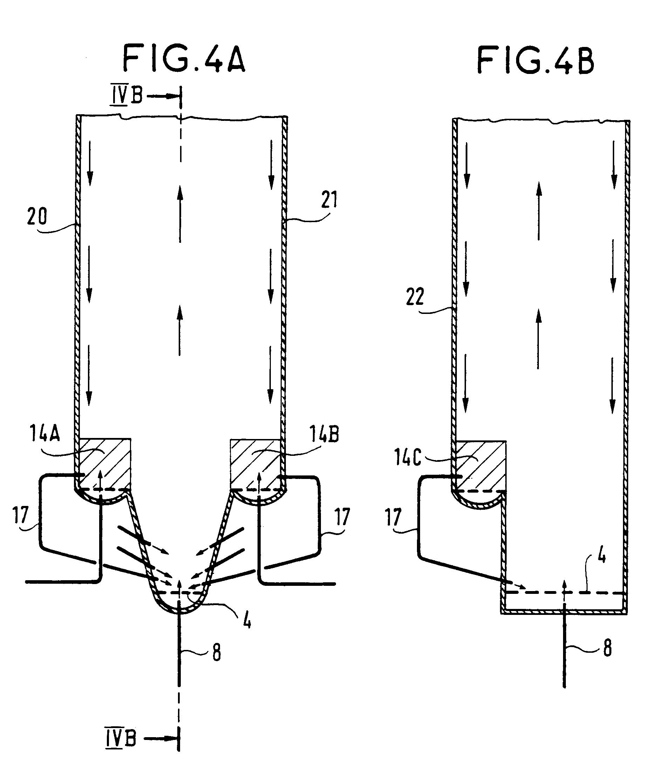

Les figures 4A et 4B représentent le bas d'un réacteur à trois lits fluidisés denses, deux 14A, 14B au-dessous des parois 20, 21 de la figure 4A et un 14C au-dessous de la paroi 22 perpendiculaire aux premières dans le plan de coupe perpendiculaire à celui de la figure 4A (axe IVB-IVB de cette figure).

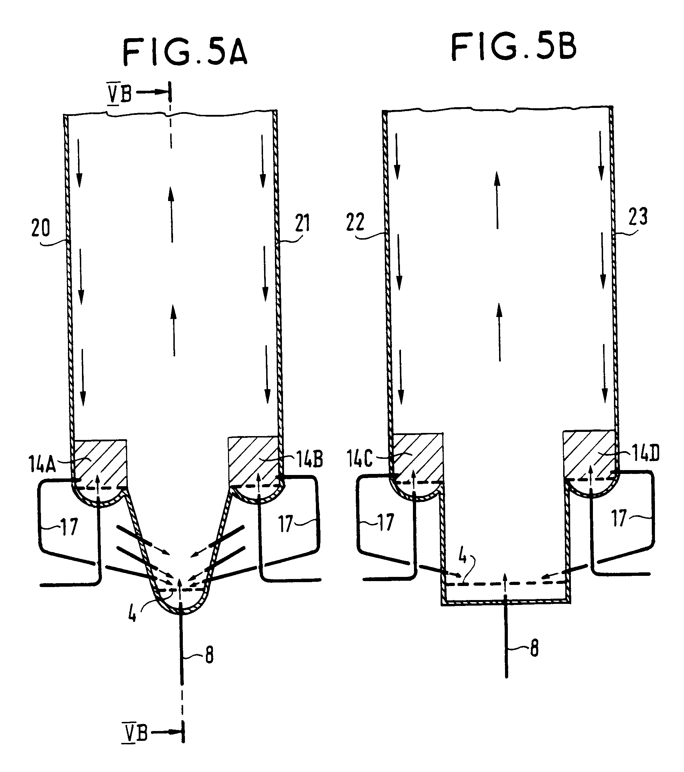

Les figures 5A et 5B représentent le bas d'un réacteur à quatre lits fluidisés denses, deux 14A, 14B au-dessous des parois 20, 21 et deux 14C, 14D au-dessous des parois perpendiculaires 22, 23.

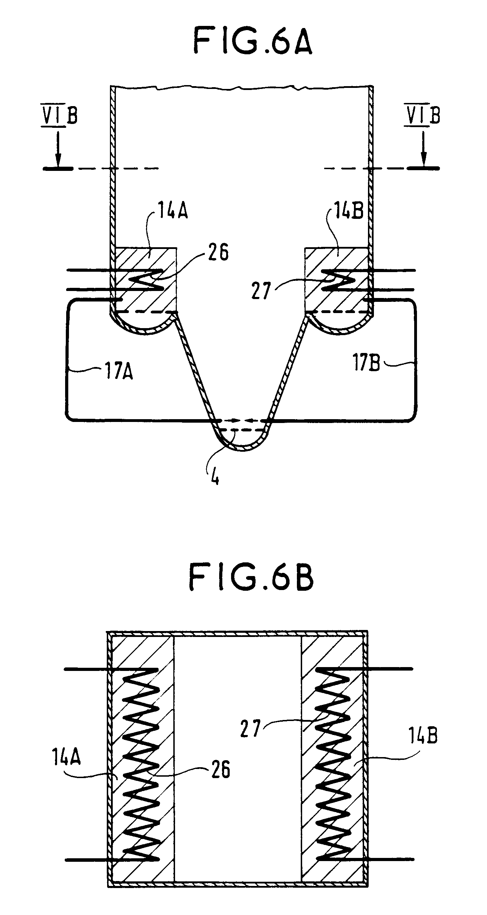

La figure 6A représente schématiquement les surfaces d'échange de chaleur dans des lits fluidisés denses. Les tubes d'échange de chaleur sont représentés par des serpentins 26, 27. Ils sont disposés sur la presque totalité de la hauteur des lits fluidisés denses.

La figure 6B est une variante d'arrangement des échangeurs dans les lits fluidisés denses de la figure 6A, vus en coupe suivant l'axe VIB-VIB de cette figure 6A, telle que lesdits échangeurs occupent la majeure partie de la longueur des lits fluidisés denses.

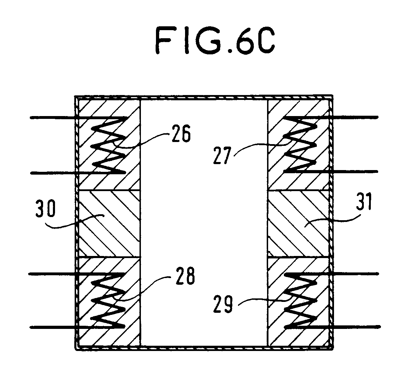

La figure 6C est une deuxième variante d'arrangement des échangeurs dans les lits fluidisés denses de la figure 6A vus en coupe suivant l'axe VIB-VIB de cette figure 6A. Dans cette deuxième variante les deux lits denses sont divisés chacun en trois compartiments. Ces compartiments extrêmes sont occupés par des échangeurs tels que 26, 28, et 27, 29 et les compartiments centraux 30, 31 sont libres de tubes d'échange.

Tous les compartiments 26, 27, 28, 29, 30, 31 sont reliés par des moyens de réinjection 17 au bas du réacteur, chaque compartiment ayant son moyen de réinjection. Les moyens de réinjection des compartiments 30 et 31 ne sont pas munis de moyens de contrôle de débit.

L'ensemble des lits fluidisés denses tels que ceux des figures 3 à 5 fonctionne à la charge maximale du réacteur et participe à son refroidissement. Aux charges intermédiaires, il est possible de contrôler le refroidissement par divers moyens (arrêt ou modulation de la fluidisation, contrôle du débit de solides réinjectés dans le bas de la zone inférieure) de façon à maintenir dans le réacteur la température optimale voisine de 850°C, assurant le meilleur rendement de désulfuration. En effet, quand la charge du réacteur diminue, la température dans le réacteur diminue du fait de l'existence d'une surface de refroidissement trop importante. La modulation ou la suppression de l'échange de chaleur dans une partie des compartiments des lits denses permet de diminuer le refroidissement du réacteur et de conserver la température optimale de combustion dans une plage de charges du réacteur plus grande, et par suite de maintenir le taux de désulfuration à une valeur élevée.

La figure 2 en particulier montre que sous l'effet de deux facteurs, le recyclage de matières solides à la base du réacteur et la vitesse élevée dans la zone inférieure où a lieu la combustion, le dispositif de l'invention permet d'assurer un découplage (qui n'existe pas dans les réacteurs à lit fluidisé circulant connus) entre la zone supérieure dont les parois sont constituées de tubes d'échange de chaleur où l'on fait le choix d'une vitesse de gaz optimale pour obtenir un bon échange de chaleur sans érosion des tubes d'échange, et la zone inférieure de combustion où l'on choisit une vitesse de gaz plus importante et où on assure une concentration plus homogène en matières solides que dans les lits fluidisés circulants connus. Si par exemple on désire une vitesse de 6 m/s dans la zone supérieure du réacteur, on peut opérer avec une vitesse comprise entre 7,2 m/s et 12 m/s dans la zone inférieure de celui-ci.

Bien que les dispositifs de réalisation d'une réaction entre un gaz et un matériau solide divisé décrits en référence aux figures portent sur des dispositifs de combustion de matières carbonées, avec refroidissement du réacteur par des parois de la zone supérieure constituées ou tapissées de tubes d'échange de chaleur, on comprendra que l'invention s'applique à d'autres réactions exothermiques que la combustion, et même à des réactions endothermiques, telles que par exemple la calcination d'alumine, du moment que l'on veut améliorer l'homogénéité des concentrations dans la zone inférieure d'un réacteur et opérer dans cette zone à des vitesses élevées qui ne conviennent pas dans la zone supérieure. Dans le cas des réactions endothermiques la zone supérieure est bien évidemment dépourvue de tubes d'échange en contact direct des matières.

**Revendications**

1. Procédé pour réaliser une réaction exothermique ou endothermique dans un réacteur entre au moins un gaz et au moins un matériau solide divisé comprenant au moins un moyen (9) d'introduction du matériau solide divisé, au moins un moyen (8) d'introduction de gaz de fluidisation et de réaction, les débits respectifs d'introduction de matériau solide divisé et de gaz de fluidisation étant tels qu'ils permettent l'établissement d'une circulation ascendante rapide du gaz et du matériau solide divisé dans le réacteur, des moyens pour envoyer le mélange de gaz réactionnel et de matériau solide divisé arrivant en haut du réacteur dans un organe de séparation (1A), des moyens (1B)pour évacuer le gaz produit par la réaction, et des moyens (1C) pour recycler le matériau solide divisé provenant de l'organe de séparation dans le bas du réacteur, caractérisé en ce qu'on établit

a) dans la zone inférieure (I) du réacteur un lit fluidisé en circulation rapide à une vitesse ascendante moyenne du gaz de fluidisation, en fût vide et à pleine charge, comprise entre 4,8 m/s et 12 m/s, la hauteur de cette zone étant telle que le temps de séjour de ce gaz dans cette zone inférieure est compris à pleine charge entre 0,25 et 4 secondes ;

b) dans la zone supérieure de section $S_2$ un lit fluidisé en circulation rapide, ayant une vitesse ascendante V du gaz de fluidisation, en fût vide et à pleine charge, comprise entre 4 et 10 m/s, le rapport de cette vitesse à celle du gaz de fluidisation dans la zone inférieure étant compris entre 1/2 et 1/1,2, la hauteur de cette zone étant telle que le temps de séjour du gaz de fluidisation dans cette zone est compris à pleine charge entre 2 et 10 secondes et la concentration P au sommet de la zone supérieure du réacteur étant au moins égale à 2 kg/m3,

c) dans la zone adjacente à la partie supérieure de la zone inférieure à lit fluidisé en circulation rapide et séparée de celle-ci, un lit fluidisé dense (13) à vitesse ascendante du gaz de fluidisation, en fût vide et à pleine charge, comprise entre 0,3 m/s et 2,5 m/s, ladite zone recevant à la fois des matériaux solides divisés redescendant de la zone supérieure le long d'au moins l'une de ses parois, et des matériaux solides provenant de la partie supérieure adjacente de la zone inférieure,

et on réinjecte des matières solides divisées à partir de la zone à lit fluidisé dense vers le bas de la zone inférieure à lit fluidisé en circulation rapide, le débit de réinjection de matières solides divisées à partir de la zone à lit fluidisé dense étant supérieur à une quantité q = P x V x $S_2$.

2. Dispositif de réalisation d'une réaction exothermique ou endothermique dans une enceinte entre au moins un gaz et au moins un matériau solide divisé comprenant au moins un moyen (9) d'introduction du matériau solide divisé, au moins un moyen (8) d'introduction de gaz de fluidisation et de réaction, les débits respectifs d'introduction de matériau solide divisé et de gaz de fluidisation étant tels qu'ils permettent l'établissement d'une circulation ascendante rapide du gaz et du matériau solide divisé dans le réacteur, des moyens pour envoyer le mélange de gaz réactionnel et de matériau solide divisé arrivant en haut du réacteur dans un organe de séparation (1A), des moyens (1B)pour évacuer le gaz produit par la réaction, et des moyens (1C) pour recycler le matériau solide divisé provenant de l'organe de séparation dans le bas du réacteur, le réacteur étant divisé en trois zones :

a) une zone inférieure (I) à lit fluidisé en circulation rapide à une vitesse ascendante moyenne du gaz de fluidisation, en fût vide et à pleine charge, comprise entre 4,8 m/s et 12 m/s, la hauteur de cette zone étant telle que le temps de séjour de ce gaz dans cette zone inférieure est compris à pleine charge entre 0,25 et 4 secondes ;

b) une zone supérieure de section $S_2$ à lit fluidisé en circulation rapide, ayant une vitesse ascendante V du gaz de fluidisation, en fût vide et à pleine charge, comprise entre 4 et 10 m/s, le rapport de cette vitesse à celle du gaz de fluidisation dans la zone inférieure étant compris entre 1/2 et 1/1,2, la hauteur de cette zone étant telle que le temps de séjour du gaz de fluidisation dans cette zone est compris à pleine charge entre 2 et 10 secondes et la concentration P au sommet de la zone supérieure du réacteur étant au moins égale à 2 kg/m3,

c) une zone à lit fluidisé dense (13), à vitesse ascendante du gaz de fluidisation, en fût vide et à pleine charge, comprise entre 0,3 m/s et 2,5 m/s, adjacente à la partie supérieure de la zone inférieure à lit fluidisé en circulation rapide et séparée de celle-ci, disposée de manière à recevoir à la fois des matériaux solides divisés redescendant de la zone supérieure le long d'au moins l'une de ses parois, et des matériaux solides provenant de la partie supérieure adjacente de la zone inférieure,

et le dispositif comportant au moins un moyen (17) de réinjection de matières solides divisées à partir de la zone à lit fluidisé dense vers le bas de la zone inférieure à lit fluidisé en circulation rapide, le débit de réinjection de matières solides divisées à partir de la zone à lit fluidisé dense étant supérieur à une quantité q = P x V x $S_2$,

et le rapport ($S_2/S_1$) de la section droite de la zone supérieure (3) à celui de la zone inférieure (2) au niveau de la zone à lit fluidisé dense étant compris entre 1,20 et 2.

3. Dispositif selon la revendication 2, caractérisé par le fait qu'il comprend plusieurs zones à lits fluidisés denses (14A, 14B, 14C, 14D) disposées sensiblement à un même niveau, et de préférence décalées angulairement autour d'un espace central.

4. Dispositif selon l'une des revendications 2 ou 3, caractérisé en ce qu'il comporte dans la ou les zones à lits fluidisés denses des organes d'échange de chaleur (26, 27, 28, 29) avec un fluide à vaporiser et/ou réchauffer.

5. Dispositif selon l'une des revendications 2 à 4, caractérisé en ce qu'il comporte des moyens d'évacuation en proportion réglable de matériaux solides divisés d'un ou plusieurs compartiments de la zone ou des zones à lits fluidisés denses.

6. Dispositif selon la revendication 4, caractérisé par le fait qu'il comporte des moyens de réglage de la température du réacteur par commande de la fluidisation d'au moins une partie d'au moins un lit fluidisé dense.

7. Dispositif selon l'une des revendications 2 à 6, caractérisé en ce qu'il comporte, dans la paroi de la zone supérieure à lit fluidisé en circulation rapide, des moyens d'échange de chaleur avec un fluide à vaporiser et/ou réchauffer.

8. Dispositif selon l'une des revendications 2 à 7, caractérisé en ce qu'il comprend des buses d'injection d'un gaz de fluidisation sous une grille audessous de la zone inférieure à lit fluidisé en circulation rapide et des buses d'injection de ce gaz (11, 12, 13) à différents niveaux de cette zone inférieure.

9. Application du dispositif selon l'une des revendications 2 à 8 à la combustion de matières carbonées.

**Patentansprüche**

1. Verfahren zur Durchführung einer exothermischen oder endothermischen Reaktion in einem Reaktor zwischen mindestens einem Gas und mindestens einem fein gekörnten Feststoffmaterial, mit mindestens einem Mittel (9) zum Einführen des fein gekörnten Feststoffmaterials, mindestens einem Mittel (8) zum Einführen von Verwirbelungs- und Reaktionsgas, wobei die eingeführten Mengen an fein gekörntem Feststoffmaterial und Verwirbelungsgas so gewählt sind, daß sich eine rasche aufsteigende Bewegung des Gases und des fein gekörnten Feststoffmaterials im Reaktor ergibt, mit Mitteln, um die Reaktionsgasmischung und das fein gekörnte Feststoffmaterial, das von oben in den Reaktor gelangt, in ein Trennorgan (1A) zu senden, mit Mitteln (1B), um das durch die Reaktion gebildete Gas abzuführen, und mit Mitteln (1C), um das fein gekörnte Feststoffmaterial aus dem Trennorgan in den unteren Bereich des Reaktors zurückzuführen, dadurch gekennzeichnet, daß

a) in der unteren Zone (I) des Reaktors ein Wirbelschichtbett in raschem Umlauf gebildet wird mit einer mittleren Aufstiegsgeschwindigkeit des Wirbelschichtgases vom Leerlauf bis zur Vollast zwischen 4,8 m/s und 12 m/s, wobei die Höhe dieser Zone so gewählt ist, daß die Verweilzeit dieses Gases in der unteren Zone bei Vollast zwischen 0,25 und 4 Sekunden liegt,

b) in der oberen Zone mit einer Querschnittsfläche S2 ein Wirbelschichtbett mit rascher Zirkulation und einer Anstiegsgeschwindigkeit V des Wirbelschichtgases vom Leerlauf bis zur Vollast zwischen 4 m/s und 10 m/s gebildet wird, wobei das Verhältnis dieser Geschwindigkeit zu der des Wirbelschichtgases in der unteren Zone zwischen 1/2 und 1/1,2 liegt und die Höhe dieser Zone so gewählt ist, daß die Verweilzeit des Wirbelschichtgases in dieser Zone bei Vollast zwischen 2 und 10 Sekunden liegt, wobei die Konzentration P am oberen Ende der oberen Zone des Reaktors mindestens gleich 2 kg/m$^3$ ist,

c) in der dem oberen Bereich der unteren Zone mit dem Wirbelschichtbett in rascher Zirkulation benachbarten Zone, die von diesem Bereich getrennt ist, ein dichtes Wirbelschichtbett (13) gebildet wird, wobei die Anstiegsgeschwindigkeit des Wirbelschichtgases von Leerlauf bis Vollast zwischen 0,3 m/s und 2,5 m/s liegt, wobei diese Zone sowohl fein gekörnte Feststoffmaterialien empfängt, die aus der oberen Zone entlang mindestens einer ihrer Wände herabsinken, als auch Feststoffmaterialien, die vom oberen benachbarten Bereich der unteren Zone kommen,

und daß fein gekörnte Feststoffmaterialien von dieser Zone mit dichtem Wirbelschichtbett nach unten zur unteren Zone mit einem Wirbelschichtbett in rascher Zirkulation zurückgespeist werden, wobei die Menge der von der Zone mit dichtem Wirbelschichtbett zurückgespeisten Feststoffmaterialien größer als q = P.V.S2 ist.

2. Vorrichtung zur Durchführung einer exothermischen oder endothermischen Reaktion in einem Behälter zwischen mindestens einem Gas und mindestens einem fein gekörnten Feststoffmaterial, mit mindestens einem Mittel (9) zum Einführen des fein gekörnten Feststoffmaterials, mindestens einem Mittel (8) zum Einführen von Wirbelschicht- und Reaktionsgas, wobei die eingeführten Mengen an fein gekörntem Feststoffmaterial und Wirbelschichtgas so gewählt sind, daß sich eine rasche aufsteigende Bewegung des Gases und des fein gekörnten Feststoffmaterials im Reaktor ergibt, mit Mitteln, um die Reaktionsgasmischung und das fein gekörnte Feststoffmaterial, das von oben in den Reaktor gelangt, in ein Trennorgan (1A) zu senden, mit Mitteln (1B), um das durch die Reaktion gebildete Gas abzuführen, und mit Mitteln (1C), um das fein gekörnte Feststoffmaterial aus dem Trennorgan in den unteren Bereich des Reaktors zurückzuspeisen, wobei der Reaktor in drei Zonen unterteilt ist, nämlich

a) in eine untere Zone (I) mit einem Wirbelschichtbett in raschem Umlauf, mit einer mittleren Aufstiegsgeschwindigkeit des Wirbelschichtgases von Leerlauf bis zur Vollast zwischen 4,8 m/s und 12 m/s, wobei die Höhe dieser Zone so gewählt ist, daß die Verweilzeit dieses Gases in dieser unteren Zone bei Vollast zwischen 0,25 und 4 Sekunden liegt,

b) in eine obere Zone mit einer Querschnittsfläche S2 mit einem Wirbelschichtbett in raschem Umlauf, mit einer Anstiegsgeschwindigkeit V des Wirbelschichtgases von Leerlauf bis Vollast zwischen 4 m/s und 10 m/s, wobei das Verhältnis dieser Geschwindigkeit zu der des Wirbelschichtgases in der unteren Zone zwischen 1/2 und 1/1,2 liegt und die Höhe dieser Zone so gewählt ist, daß die Verweilzeit des Wirbelschichtgases in dieser Zone bei Vollast zwischen 2 und 10 Sekunden liegt, wobei die Konzentration P am oberen Ende der oberen Zone des Reaktors mindestens gleich 2 kg/m³ ist,

c) eine Zone mit dichtem Wirbelschichtbett (13), in dem die ansteigende Geschwindigkeit des Wirbelschichtgases von Leerlauf bis Vollast zwischen 0,3 m/s und 2,5 m/s liegt, wobei diese Zone neben dem oberen Bereich der unteren Zone mit dem Wirbelschichtbett in rascher Zirkulation liegt und von diesem getrennt ist, sowie so angeordnet ist, daß sie sowohl fein geteilte Feststoffmaterial empfängt, das von der oberen Zone entlang mindestens einer ihrer Wände herabsinkt, als auch Feststoffmaterial, das vom benachbarten oberen Bereich der unteren Zone stammt,

und wobei mindestens ein Mittel (17) zur Wiedereinspeisung von fein gekörntem Feststoffmaterial von der Zone mit dichtem Wirbelschichtbett in den unteren Teil der unteren Zone mit Wirbelschichtbett in raschem Umlauf vorgesehen ist, wobei die Menge des von der Zone mit dichtem Wirbelschichtbett kommenden fein geteilten Feststoffmaterials größer als eine Menge q = P.V.S2 ist, und wobei das Verhältnis (S2/S1) zwischen der Querschnittsfläche in der oberen Zone (3) und der Querschnittsfläche in der unteren Zone (2) in Höhe des dichten Wirbelschichtbetts zwischen 1,20 und 2,0 liegt.

3. Vorrichtung nach Anspruch 2, dadurch gekennzeichnet, daß sie mehrere Zonen mit dichten Wirbelschichtbetten (14A, 14B, 14C, 14D) aufweist, die im wesentlichen auf gleichem Niveau liegen und vorzugsweise um einen zentralen Raum herum winkelmäßig verteilt sind.

4. Vorrichtung nach einem der Ansprüche 2 oder 3, dadurch gekennzeichnet, daß sie in der oder den Zonen mit dichten Wirbelschichtbetten Wärmeaustauschorgane (26, 27, 28, 29) mit einem verdampfenden und/oder sich erwärmenden Fluid besitzt.

5. Vorrichtung nach einem der Ansprüche 2 bis 4, dadurch gekennzeichnet, daß sie Mittel zur Abfuhr eines regelbaren Anteils an fein gekrönten Feststoffmaterialien aus einem oder mehreren Abteilen der Zone oder der Zonen mit dichten Wirbelschichtbetten besitzt.

6. Vorrichtung nach Anspruch 4, dadurch gekennzeichnet, daß sie Mittel zur Regelung der Temperatur des Reaktors mit Hilfe einer Steuerung der Verwirbelung mindestens eines Teils mindestens eines dichten Wirbelschichtbetts besitzt.

7. Vorrichtung nach einem der Ansprüche 2 bis 6, dadurch gekennzeichnet, daß sie in der Wand der oberen Zone mit Wirbelschichtbett in raschem Umlauf Mittel zum Austausch von Wärme mit einem verdampfenden oder zu erwärmenden Fluid besitzt.

8. Vorrichtung nach einem der Ansprüche 2 bis 7, dadurch gekennzeichnet, daß sie Düsen zum Einspeisen eines Verwirbelungsgases unter ein Gitter unter der unteren Zone mit Wirbelschichtbett in raschem Umlauf sowie Düsen zum Einspeisen dieses Gases (11, 12, 13) in verschiedenen Höhen dieser unteren Zone besitzt.

9. Anwendung der Vorrichtung nach einem der Ansprüche 2 bis 8 auf die Verbrennung von kohlenstoffhaltigen Materialien.

## Claims

1. A method of performing an exothermal or an endothermal reaction inside a reactor between at least one gas and at least one particulate material, comprising at least one means (9) for introducing particulate material, at least one means (8) for introducing reaction and fluidization gas, with the respective introduced flow rates of the particulate material and of the fluidization gas being such that they enable a fast upward flow of gas and particulate material to be established inside the reactor, means for directing a mixture of the reaction gas and the particulate material reaching the top of the reactor into a separator (1A), means (1B) for exhausting the gas produced by the reactor, and means (1C) for recycling the particulate material from the separator to the bottom of the reactor, the method being characterized in that:

   a) in the lower zone (I) of the reactor a fluidized bed operating under fast conditions with a mean upward velocity of the fluidization gas under empty conditions and at full load in the range 4.8 m/s to 12 m/s, the height of said zone being such that the gas residence time through said lower zone lies in the range 0.25 seconds to 4 seconds;

   b) in a higher zone of section S2 a fluidized bed operating under fast conditions, with an upward velocity V of the fluidization gas under empty conditions and at full load in the range 4 m/s to 10 m/s, the ratio of said velocity to the velocity of the fluidization gas in said lower zone being in the range 1/2 to 1/1.2, the height of said zone being such that the residence time of the fluidization gas in said zone at full load lies in the range 2 seconds to 10 seconds, and the concentration P at the top of the higher zone of the reactor is not less than 2 kg/m3; and

   c) in the zone adjacent to the top of the lower zone operating under fast fluidized bed conditions and separated therefrom, a dense fluidized bed (13) with the gas flowing upwards under empty conditions and at full load at a velocity in the range 0.3 m/s to 2.5 m/s, said zone receiving both particulate material falling down from the higher zone along at least one of its walls, and particulate material coming upwards from the adjacent top of the lower zone; and

   particulate material from the dense fluidized bed zone is reinjected to the bottom of said lower zone, operating under fast fluidized bed conditions, the rate at which particulate material is reinjected from said zone operating under dense fluidized bed conditions being greater than the quantity:

$$q = P \times V \times S_2.$$

2. Apparatus for performing an exothermal or an endothermal reaction inside an enclosure between at least one gas and at least one particulate material, the apparatus comprising at least one means (9) for introducing particulate material, at least one means (8) for introducing reaction and fluidization gas, with the respective introduced flow rates of the particulate material and of the fluidization gas being such that they enable a fast upward flow of gas and particulate material to be established inside the reactor, means for directing a mixture of the reaction gas and the particulate material reaching the top of the reactor into a separator (1A), means (1B) for exhausting the gas produced by the reactor, and means (1C) for recycling the particulate material from the separator to the bottom of the reactor, the reactor being divided into three zones:

   a) a lower zone (I) operating under fast fluidized bed conditions with a mean upward velocity of the fluidization gas under empty conditions and at full load in the range 4.8 m/s to 12 m/s, the height of said zone being such that the gas residence time through said lower zone lies in the range 0.25 seconds to 4 seconds;

   b) a higher zone of section $S_2$ operating under fast fluidized bed conditions, with an upward velocity V of the fluidization gas under empty conditions and at full load in the range 4 m/s to 10 m/s, the ratio of said velocity to the velocity of the fluidization gas in said lower zone being in the range 1/2 to 1/1.2, the height of said zone being such that the residence time of the fluidization gas in said zone at full load lies in the range 2 seconds to 10 seconds, and the concentration P at the top of the higher zone of the reactor is not less than 2 kg/m3; and

   c) a zone operating under dense fluidized bed conditions with the gas flowing upwards under empty conditions and at full load at a velocity in the range 0.3 m/s to 2.5 m/s, said zone adjacent to the top of said lower zone operating under fast fluidized bed conditions and separated therefrom, disposed in such a manner as to receive both particulate material falling down from the higher zone along at least one of its walls, and particulate material coming upwards from the adjacent top of the lower zone; and

   the apparatus also comprising at least one means (17) for reinjecting particulate material from the dense fluidized bed zone to the bottom of said lower zone operating under fast fluidized bed conditions, the rate at which particulate material is re-injected from said zone operating under dense fluidized bed conditions being greater than the quantity:

$$q = P \times V \times S_2$$

and the ratio ($S_2/S_1$) of the right section of the higher zone (3) to the right section of the lower zone (2) at the level of the zone having the dense fluidized bed lying in the range 1.20 to 2.

3. Apparatus according to claim 2, characterized by the fact that it includes a plurality of zones operating under dense fluidized bed conditions (14A, 14B, 14C, 14D) disposed substantially at the same level, and preferably angularly distributed around a central space.

4. Apparatus according to any one of claims 2 to 3, characterized in that it includes heat exchange members (26, 27, 28, 29) in its dense fluidized bed zone(s) for exchanging heat with a fluid to be vaporized and/or heated.

5. Apparatus according to any one of claims 2 to 4, characterized in that it includes means for evacuating an adjustable proportion of the particulate material from one or more compartments of the dense fluidized bed zone(s).

6. Apparatus according to claim 4, characterized in that it includes means for adjusting the temperature of the reactor by controlling the fluidization of at least a portion of at least one dense fluidized bed.

7. Apparatus according to any one of claims 2 to 6, characterized in that it includes, in the wall of the higher zone operating under fast circulation fluidized bed conditions, means for exchanging heat with a fluid to be vaporized and/or heated.

8. Apparatus according to any one of claims 2 to 7, characterized in that it includes nozzles for injecting fluidization gas beneath a grid beneath the lower zone operating under fast circulation fluidized bed conditions, and nozzles for injecting said gas (11, 12, 13) at different levels of said lower zone.

9. The application of the apparatus according to any one of claims 2 to 8 to burning substances containing carbon.

# FIG.1

# FIG.2

# FIG.3A

# FIG.3B

# FIG.4A

# FIG.4B

# FIG.5A

# FIG.5B

# FIG.6A

# FIG.6B

# FIG.6C

# FIG.7